# EUROPÄISCHE PATENTANMELDUNG

(11) **EP 3 176 528 A1**
(43) Veröffentlichungstag der Anmeldung: **07.06.2017**
(21) Anmeldenummer: 16001772.9
(22) Anmeldetag: 10.08.2016
(51) Int. Cl.: F28D 20/00, F04F 5/54

(54) **ANLAGE ZUR ENERGIEGEWINNUNG**

(30) Priorität: 10.08.2015 DE 202015005698 U
(71) Anmelder: Seewald, Gerhard, 16515 Oranienburg (DE)
(72) Erfinder: Seewald, Gerhard, 16515 Oranienburg (DE)

(57) **Zusammenfassung**

Die Erfindung betrift eine Anlage (1) zur Energiegewinnung mit einem Wärmespeicher (3), mit einem Wärmetauscherkreislauf (7) mit einer ersten Pumpeinrichtung (11), in den der Wärmespeicher eingebunden ist, wobei der Wärmespeicher auch in einen Wärmegenerationskreislauf (17) mit einer zweiten Pumpeinrichtung (21) eingebunden ist, und mit einem Wärmespeichermedium (5), das Wärme eines Wärmeerzeugers speichern kann. Erfindungsgemäß ist das Wärmespeichermedium (5) der Wärmeerzeuger.

## Beschreibung

Die vorliegende Erfindung betrifft eine Anlage zur Energiegewinnung mit einem Wärmespeicher, mit einem Wärmetauscherkreislauf mit einer ersten Pumpeinrichtung, in den der Wärmespeicher eingebunden ist, wobei der Wärmespeicher auch in einen Wärmegenerationskreislauf mit einer zweiten Pumpeinrichtung eingebunden ist, und mit einem Wärmespeichermedium, das Wärme eines Wärmeerzeugers speichern kann

Solche Anlagen sind im Stand der Technik sehr bekannt. Es gibt sehr viele Anlagen, mit denen Wärme erzeugt wird, die erzeugte Wärme gespeichert wird und dann über einen Wärmetauscher an einen Verbraucher übertragen und von diesem entweder direkt oder in einer umgewandelten Form genutzt wird. Es ist also üblich, einem Wärmespeichermedium in einem Wärmegenerationskreislauf Wärme zuzuführen, die das Wärmespeichermedium dann in einem Wärmetauscherkreislauf zeitverzögert nach einer Speicherung wieder abgibt. Die Wärmezuführung erfolgt in allen bekannten Fällen durch Übertagung von Wärme auf das Wärmespeichermedium, die außerhalb des Mediums erzeugt wird. Das Wärmespeichermedium leistet zur Erzeugung der Wärme selbst keinen Beitrag.

Eine Aufgabe der vorliegenden Erfindung ist daher, eine Anlage der eingangs genannten Art derart weiterzubilden, dass diese optimal genutzt werden kann, selbst dann, wenn bekannte Wärmeerzeuger nicht vorhanden sind.

Die Aufgabe wird erfindungsgemäß dadurch gelöst, dass das Wärmespeichermedium der Wärmeerzeuger ist.

Mit der vorliegenden Erfindung kann eine Anlage zur Energiegewinnung ganz autark betrieben werden, d.h. ganz ohne einen externen Wärmeerzeuger, z.B. ein Heizkraftwerk, eine Geothermieanlage, eine Solaranlage etc. Dadurch wird eine solche Anlage sehr mobil und vielseitig einsetzbar.

Ein weiterer Vorteil der vorliegenden Erfindung ist, dass im Wärmegenerationskreislauf stromaufwärts zwischen der ersten Pumpeinrichtung und dem Wärmspeicher eine Beschleunigungseinrichtung für das Wärmespeichermedium angeordnet ist.

Mithilfe der Beschleunigungseinrichtung wird das Wärmespeichermedium beschleunigt und erzeugt Wärme, d.h. die Austrittstemperatur des Wärmespeichermediums an der Beschleunigungseinrichtung ist höher als die Eintrittstemperatur des Wärmespeichermediums in die Beschleunigungseinrichtung. Dieses ΔT erzeugt das Wärmespeichermedium bei seiner Beschleunigung in der Beschleunigungseinrichtung.

Ein weiterer Vorteil der vorliegenden Erfindung ist, dass die Beschleunigungseinrichtung einen Gaseinlass aufweist. Durch den Gaseinlass wird dem Wärmespeichermedium ein Gas beigemischt, mit dessen Unterstützung die Beschleunigung optimierbar ist.

Ein weiterer Vorteil der vorliegenden Erfindung ist, dass das Wärmespeichermedium eine Flüssigkeit und der Gaseinlass ein Lufteinlass ist, um der Flüssigkeit Luft zuzuführen. Häufig ist die Flüssigkeit Wasser, so dass dann besonders reichlich zur Verfügung stehende und somit preiswerte Stoffe eingesetzt werden.

Weitere Vorteile der vorliegenden Erfindung ergeben sich aus den Merkmalen der weiteren Unteransprüche.

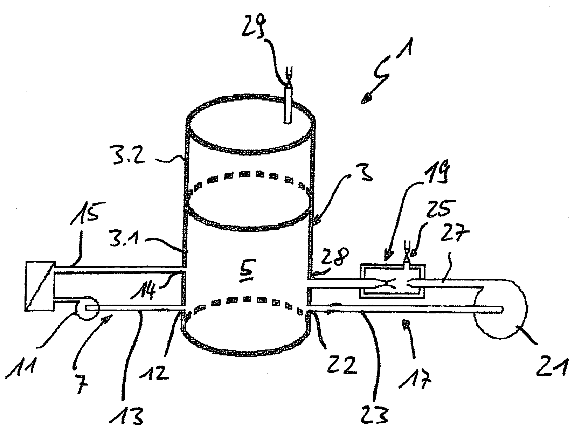

Eine Ausführungsform der vorliegenden Erfindung wird im Folgenden anhand der Zeichnung näher beschrieben. Die einzige Figur zeigt einen schematisch stark vereinfachten Aufbau einer Anlage zur Energiegewinnung gemäß vorliegender Erfindung.

In der Figur ist eine Anlage 1 zur Energiegewinnung stark vereinfacht und auf die wesentlichen Merkmale reduziert, schematisch dargestellt.

Die Anlage 1 umfasst einen Wärmespeicher 3, der als ein Behälter ausgebildet ist. In diesem Wärmespeicher 3 befindet sich ein Wärmespeichermedium 5. Ein solches Wärmespeichermedium 5 kann ein beliebiges Wärmespeichermedium sein, das strömungsfähig ist und aufgrund seiner Eigenschaften geeignet ist, Wärme aufzunehmen. In der vorliegenden Ausführungsform ist dieses Wärmespeichermedium 5 eine Flüssigkeit und vorzugsweise Wasser. Das Wärmespeichermedium ist aber nicht darauf beschränkt.

An den Wärmespeicher 3 angeschlossen ist ein Wärmetauscherkreislauf 7. In diesen integriert ist ein Wärmetauscher 9 und eine erste Pumpeinrichtung 11, Der Wärmespeicher 3 weist einen ersten Saug-Anschluss 12 für eine erste Saugleitung 13 auf, über welche die erste Pumpeinrichtung 11 das Wärmespeichermedium 5 aus dem Wärmespeicher 3 in den Wärmetauscher 9 pumpt. In dem Wärmetauscher 9 findet in bekannter Weise eine Abgabe von Wärme an einen Nutzer statt. Das abgekühlte Wärmespeichermedium 5 wird dann über eine erste Druckleitung 15 und einen ersten Druck-Anschluss 16 in den Wärmespeicher 3 zurückgeführt. Der erste Saug-Anschluss 12 liegt in Bezug auf die Füllhöhe des Wärmespeichers 3 unterhalb des ersten Druck-Anschlusses 16.

An den Wärmespeicher 3 angeschlossen ist auch ein Wärmegenerationskreislauf 17. Der Wärmegenrationskreislauf 17 umfasst eine Beschleunigungseinrichtung 19 und eine zweite Pumpeinrichtung 21, die in der vorliegenden Ausführungsform eine Umwälzpumpe ist. Der Wärmespeicher 3 weist zweiten Saug-Anschluss 22 für eine zweite Saugleitung 23 auf, über welche die zweite Pumpeinrichtung 21 das Wärmespeichermedium 5 aus dem Wärmespeicher 3 in die Beschleunigungseinrichtung 19 pumpt. In der Beschleunigungseinrichtung 9 wird das Wärmespeichermedium stark beschleunigt. Die Beschleunigung erfolgt durch eine Reduzierung des Strömungsquerschnitts in der Saugleitung 23 bzw. in der Beschleunigungseinrichtung 19. Zu Verstärkung der Beschleunigung weist die Beschleunigungseinrichtung in der vorliegenden Ausführungsform einen Gaseinlass 25 auf. Über diesen Gaseinlass 25 wird das zu beschleunigenden Wärmespeichermedium 5 mit Gas durchsetzt. Für diesen Zweck ist eine Mehrzahl von gasförmigen Stoffen geeignet.

In der vorliegenden Ausführungsform ist der Gaseinlass 25 ein Lufteinlass, über den dem Wärmespeichermedium Luft zugeführt wird. Die Zuführung von Gas bzw. Luft verstärkt die Beschleunigungswirkung der Beschleunigungseinrichtung 19 erheblich. Dabei erzeugt das Wärmespeichermedium 5 Wärme, d.h. die Austrittstemperatur des Wärmespeichermediums 5 an der Beschleunigungseinrichtung 19 ist um ein ΔT höher als die Eintrittstemperatur. Das um ΔT erwärmte Wärmespeichermedium 5 wird dann über eine zweite Druckleitung 27 und einen Druck-Anschluss 28 in den Wärmespeicher 3 zurückgeführt. Der zweite Saug-Anschluss 22 liegt in Bezug auf die Füllhöhe des Wärmespeichers 3 unterhalb des zweiten Druck-Anschlusses 16.

Aufgrund des in den Wärmespeicher 3 über den zweiten Druck-Anschluss 28 zugeführten Gemisches aus flüssigem Wärmespeichermedium und Gas erfolgt in dem Wärmespeicher 3 eine Phasentrennung, wobei die flüssige Phase in einem unteren Bereich 3.1 und die Gasphase in einem oberen Bereich 3.2 zu finden sind. Die ersten und zweiten Saug- und Druckanschlüsse liegen alle im unteren Bereich 3.1, also im Bereich der flüssigen Phase.

Im oberen Bereich 3.2, also dem Bereich der Gasphase, weist der Wärmespeicher 3 ein Überdruckventil 29 auf. Über dieses Überdruckventil 29 kann einerseits ein Druckausgleich im Wärmespeicher 3 hergestellt werden und anderseits der abgegebene Druck einem Nutzer zur Verfügung gestellt werden.

### Bezugszeichenliste

- 1: Anlage
- 3: Wärmespeicher
- 3.1: unterer Bereich
- 3.2: oberer Bereich
- 5: Wärmespeichermedium
- 7: Wärmetauscherkreislauf
- 9: Wärmtauscher
- 11: erste Pumpeinrichtung
- 12: erster Saug-Anschluss
- 13: erste Saugleitung
- 14: erster Druck-Anschluss
- 15: erste Druckleitung
- 17: Wärmegernationskreislauf
- 19: Beschleunigungseinrichtung
- 21: zweite Pumpeinrichtung
- 22: zweiter Saug-Anschluss
- 23: zweite Saugleitung
- 25: Gaseinlass
- 27: zweite Druckleitung
- 28: zweiter Druck-Anschluss
- 29: Überdruckventil

## Patentansprüche

1. Anlage (1) zur Energiegewinnung mit einem Wärmespeicher (3), mit einem Wärmetauscherkreislauf (7) mit einer ersten Pumpeinrichtung (11), in den der Wärmespeicher (3) eingebunden ist, wobei der Wärmespeicher (3) auch in einen Wärmegenerationskreislauf (17) mit einer zweiten Pumpeinrichtung (21) eingebunden ist, und mit einem Wärmespeichermedium (5), das Wärme eines Wärmeerzeugers speichern kann,
**dadurch gekennzeichnet,**
**dass** das Wärmespeichermedium (5) der Wärmeerzeuger ist.

2. Anlage nach Anspruch 1,
**dadurch gekennzeichnet,**
**dass** im Wärmegenerationskreislauf (17) stromaufwärts zwischen der erste Pumpeinrichtung (11) und dem Wärmspeicher (3) eine Beschleunigungseinrichtung (19) für das Wärmespeichermedium (5) angeordnet ist.

3. Anlage nach Anspruch 2,
**dadurch gekennzeichnet,**
**dass** die Beschleunigungseinrichtung (19) einen Gaseinlass (25) aufweist.

4. Anlage nach Anspruch 3,
**dadurch gekennzeichnet,**
**dass** die Beschleunigungseinrichtung (19) ein Gemisch aus Wärmespeichermedium (5) und Gas beschleunigt und das beschleunigte Gemisch in den Wärmespeicher (3) gelangt.

5. Anlage nach einem der Ansprüche 1 bis 4,
**dadurch gekennzeichnet,**
**dass** das Wärmespeichermedium (5) eine Flüssigkeit ist.

6. Anlage nach einem der Ansprüche 2 bis 5,
**dadurch gekennzeichnet,**
**dass** der Gaseinlass (25) ein Lufteinlass ist.

7. Anlage nach einem der vorstehenden Ansprüche,
**dadurch gekennzeichnet,**
**dass** der Wärmespeicher (3) eine Phasentrennung Flüssigkeit/Gas aufweist und der Wärmegenerationskreislauf (17) in einem unteren Bereich (3.1) der Flüssigkeitsphase an den Wärmespeicher (3) angeschlossen ist.

8. Anlage nach einem der vorstehenden Ansprüche,
**dadurch gekennzeichnet,**
**dass** der Wärmetauscherkreislauf (7) in einem unteren Bereich (3.1) der Flüssigkeitsphase an den Wärmespeicher angeschlossen ist.

9. Anlage nach einem der vorstehenden Ansprüche,
**dadurch gekennzeichnet,**
**dass** der Wärmespeicher (3) in einem oberen Bereich (3.2) der Gasphase ein Überdruckventil (29) aufweist.

10. Anlage nach einem der vorstehenden Ansprüche,
**dadurch gekennzeichnet,**
**dass** der Wärmetauscherkreislauf (7) die zweite Pumpeinrichtung umfasst, um das Wärmespeichermedium (5) aus dem Wärmespeicher (3) zu einem Wärmetauscher (9) zu pumpen.
